# EUROPÄISCHE PATENTSCHRIFT

(11) **EP 1 845 578 B1**
(45) Veröffentlichungstag und Bekanntmachung des Hinweises auf die Patenterteilung: **11.05.2016**
(21) Anmeldenummer: 07104985.2
(22) Anmeldetag: 27.03.2007
(51) Int. Cl.: H01M 8/04, H01M 8/06, H01M 8/12, H01M 8/24

(54) **Brennstoffzellensystem**
Fuel cell system
Système de cellules combustibles

(30) Priorität: 12.04.2006 DE 102006017616
(43) Veröffentlichungstag der Anmeldung: 17.10.2007
(73) Patentinhaber: Eberspächer Climate Control Systems GmbH & Co. KG, 73730 Esslingen (DE)
(72) Erfinder: Kaupert, Andreas, 73730 Esslingen (DE)
(74) Vertreter: BRP Renaud & Partner mbB Rechtsanwälte Patentanwälte Steuerberater

(56) Entgegenhaltungen:
- EP-A- 0 496 011
- EP-A- 1 557 896
- US-B1- 6 608 463

## Beschreibung

Die vorliegende Erfindung betrifft ein Brennstoffzellensystem, insbesondere für ein Kraftfahrzeug, mit den Merkmalen des Oberbegriffs des Anspruchs 1.

Ein derartiges Brennstoffzellensystem ist beispielsweise aus der EP 1 557 896 A1 bekannt und umfasst eine Brennstoffzelle zur Stromerzeugung aus Oxidatorgas und Brenngas, die einen Anodeneingang, einen Anodenausgang, einen Kathodeneingang, einen Kathodenausgang und wenigstens einen Stromanschluss aufweist, sowie einen Reformer zur Brenngaserzeugung aus Oxidatorgas und Kraftstoff, der einen Kraftstoffeingang, einen Oxidatoreingang und einen Brenngasausgang aufweist. Eine erste Oxidatorleitung zur Versorgung der Brennstoffzelle mit Oxidatorgas ist an deren Kathodeneingang angeschlossen. Eine zweite Oxidatorleitung zur Versorgung des Reformers mit Oxidatorgas ist an dessen Oxidatoreingang angeschlossen. Desweiteren umfasst das bekannte Brennstoffzellensystem einen Rezirkulationswärmeübertrager, der einerseits in die erste Oxidatorleitung und andererseits in eine Rezirkulationsleitung eingebunden ist. Die Rezirkulationsleitung ist eingangsseitig an eine mit dem Anodenausgang der Brennstoffzelle verbundene Anodenabgasleitung und ausgangsseitig an einen Rezirkulationseingang des Reformers angeschlossen. Hierdurch ist es möglich, Anodenabgas in den Reformerprozess zu rezirkulieren, wobei gleichzeitig über den Rezirkulationswärmeübertrager das der Brennstoffzelle zugeführte Oxidatorgas vorgewärmt und das rezirkulierte Anodenabgas gekühlt werden kann. Das bekannte Brennstoffzellensystem ist außerdem mit einem Restgasbrenner ausgestattet, der einerseits an die Anodenabgasleitung und andererseits unmittelbar an den Kathodenausgang der Brennstoffzelle angeschlossen ist.

Weitere Brennstoffzellensysteme sind beispielsweise aus der DE 10 2004 002 337 A1, aus der US 6,608,463 B1, aus der DE 103 15 255 A1 und aus der DE 10 2005 001 361 bekannt.

Die vorliegende Erfindung beschäftigt sich mit dem Problem, für ein Brennstoffzellensystem der eingangs genannten Art eine verbesserte Ausführungsform anzugeben, die sich insbesondere durch einen erhöhten Wirkungsgrad des Brennstoffzellenprozesses bzw. durch eine erhöhte Lebensdauer von Komponenten des Brennstoffzellensystems auszeichnet.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, mit Hilfe des Rezirkulationswärmeübertragers das dem Reformer zugeführte Oxidatorgas vorzuwärmen. Zu diesem Zweck wird der Rezirkulationswärmeübertrager entweder in eine gemeinsame Oxidatorversorgungsleitung oder in die zweite Oxidatorleitung eingebunden. Bei einer Kopplung der Rezirkulationsleitung mit der gemeinsamen Oxidatorversorgungsleitung, von der die erste und die zweite Oxidatorleitung abgehen, lässt sich sowohl das dem Reformer als auch das der Brennstoffzelle zugeführte Oxidatorgas vorwärmen, während bei der Kopplung der Rezirkulationsleitung mit der zweiten Oxidatorleitung nur das dem Reformer zugeführte Oxidatorgas vorgewärmt wird. Die Vorwärmung des dem Reformer zugeführten Oxidatorgases wirkt sich vorteilhaft auf den Reformierungsprozess aus, wodurch sich dessen Wirkungsgrad und somit der Wirkungsgrad des Brennstoffzellensystems erhöht. Gleichzeitig kann - je nach Konfiguration - eine stärkere Abkühlung des rezirkulierten Gases erzielt werden, was ebenfalls zu einer Verbesserung des Reformierungsprozesses führen kann. Gleichzeitig werden hitzeempfindliche Komponenten, die sich beispielsweise stromab des Rezirkulationswärmeübertragers in der Rezirkulationsleitung befinden, z.B. ein Gebläse, geschont.

Beim erfindungsgemäßen Brennstoffzellensystem ist ein Restgasbrenner vorgesehen, der eingangsseitig an eine Kathodenabgasleitung und an die Anodenabgasleitung angeschlossen ist und der ausgangsseitig an eine Brennstoffzellenabgasleitung angeschlossen ist. Der Restgasbrenner kann dazu genutzt werden, im Anodenabgas vorhandenes, in der Brennstoffzelle nicht umgesetztes Brenngas umzusetzen. Hierdurch lässt sich die Energieausbeute des Brennstoffzellensystems verbessern. Erfindungsgemäß ist die Rezirkulationsleitung bei vorhandenem Restgasbrenner entweder stromauf desselben an die Anodenabgasleitung oder stromab desselben an die Brennstoffzellenabgasleitung angeschlossen. Hierdurch kann das rückgeführte Brenngas zur Gemischbildung im Reformer genutzt werden.
Bei einer anderen Weiterbildung kann stromab des Restgasbrenners ein Wärmeübertrager oder Hauptwärmeübertrager in der Brennstoffzellenabgasleitung angeordnet sein, der außerdem in die erste Oxidatorleitung eingebunden ist. Mit Hilfe dieses Hauptwärmeübertragers kann die im Abgas des Restgasbrenners enthaltene Wärme zum Aufheizen des der Brennstoffzelle zugeführten Oxidatorgases genutzt werden. Bei einer derartigen Ausführungsform ist es grundsätzlich denkbar, die Rezirkulationsleitung stromab des Hauptwärmeübertragers an die Brennstoffzellenabgasleitung anzuschließen. Auf diese Weise kann die stromab des Hauptwärmeübertragers im Abgas des Restgasbrenners bzw. der Brennstoffzelle enthaltene restliche Wärme zum Vorwärmen des dem Reformer zugeführten Oxidatorgases genutzt werden.
Weitere wichtige Merkmale und Vorteile der Erfindung ergeben sich aus den Unteransprüchen, aus den Zeichnungen und aus der zugehörigen Figurenbeschreibung anhand der Zeichnungen. Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung wie sie in den Ansprüchen definiert ist zu verlassen.

Bevorzugte Ausführungsbeispiele der Erfindung sind in der Zeichnung dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,

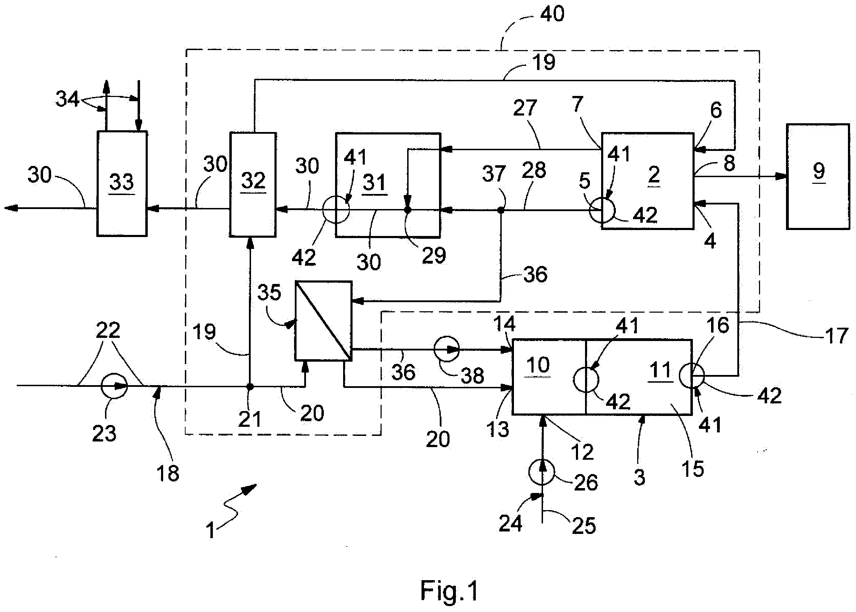

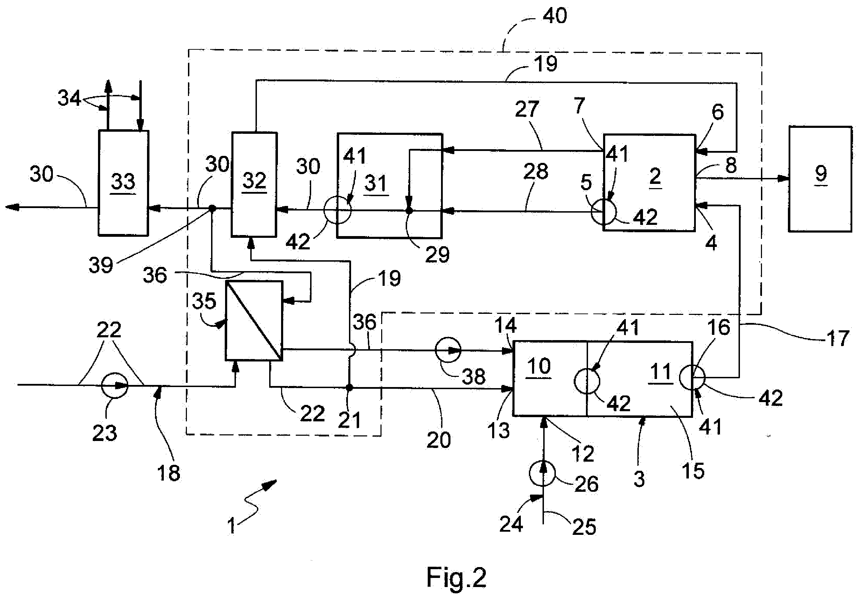

- Fig. 1 und 2: jeweils eine schematische, schaltplanartige Prinzipdarstellung eines Brennstoffzellensystems bei verschiedenen Ausführungsformen.

Entsprechend den Fig. 1 und 2 umfasst ein Brennstoffzellensystem 1, das in einem Kraftfahrzeug angeordnet sein kann, zumindest eine Brennstoffzelle 2 und einen Reformer 3. Die Brennstoffzelle 2 dient zur Erzeugung von Strom, den sie in bekannter Weise aus einem Oxidatorgas und einem Brenngas erzeugt. Die Brennstoffzelle 2 kann beispielsweise als Festkörper-Brennstoffzelle (SOFC) und vorzugsweise als Hochtemperatur-Brennstoffzelle ausgebildet sein. Für die Stromerzeugung wird die Brennstoffzelle 2 kathodenseitig mit dem Oxidatorgas versorgt, das beispielsweise durch Luft oder durch reinen Sauerstoff gebildet ist. Außerdem wird die Brennstoffzelle 2 im Betrieb anodenseitig mit dem Brenngas versorgt, das wasserstoffhaltig ist. Dementsprechend weist die Brennstoffzelle 2 einen Anodeneingang 4, einen Anodenausgang 5, einen Kathodeneingang 6, einen Kathodenausgang 7 und zumindest einen elektrischen Anschluss oder Stromabschluss 8 auf. Über den wenigstens einen Stromanschluss 8 ist ein elektrischer Verbraucher 9 an die Brennstoffzelle 2 bzw. an das Brennstoffzellensystem 1 angeschlossen bzw. anschließbar.

Bei einem in einem Kraftfahrzeug angeordneten Brennstoffzellensystem 1 handelt es sich beim elektrischen Verbraucher 9 vorzugsweise um solche elektrische Verbraucher 9, die für den normalen Fahrbetrieb des Fahrzeugs nicht erforderlich sind. Vielmehr dienen diese Verbraucher 9 dem Fahrzeugführer zur Komfortsteigerung, wenn das Fahrzeug ruht, also wenn eine Brennkraftmaschine des Fahrzeugs ausgeschaltet ist. Das Brennstoffzellensystem 1 stellt im Fahrzeug demnach eine motorunabhängige Stromversorgung bereit. Verbraucher 9 können beispielsweise sein eine Klimaanlage, ein Fernsehgerät, ein Kühlschrank, eine Kochstelle, ein Mikrowellenherd und das Brennstoffzellensystem 1 selbst.

Der Reformer 3 dient zur Erzeugung des wasserstoffhaltigen Brenngases aus Oxidatorgas, vorzugsweise Luft oder Sauerstoff, und aus Kraftstoff, vorzugsweise Kohlenwasserstoffe. Vorzugsweise wird als Kraftstoff zur Versorgung des Reformers 3 derjenige Kraftstoff verwendet, der in dem mit dem Brennstoffzellensystem 1 ausgestatteten Fahrzeug zur Versorgung einer Brennkraftmaschine ohnehin zur Verfügung steht.

Der Reformer 3 umfasst einen Gemischbildungsabschnitt 10 und unmittelbar daran angrenzend einen Katalysatorabschnitt 11. Im Gemischbildungsabschnitt 10 erfolgt die Bildung eines Gemischs aus Oxidatorgas und Kraftstoff. Gleichzeitig kann der Gemischbildungsabschnitt 10 auch als Verdampfer arbeiten, wenn flüssiger Kraftstoff verwendet wird. Am Gemischbildungsabschnitt 10 sind ein Kraftstoffeingang 12 und ein Oxidatoreingang 13 des Reformers 3 angeordnet. Des Weiteren ist noch ein Rezirkulationseingang 14 vorgesehen, der weiter unten näher erläutert wird.

Der Katalysatorabschnitt 11 dient zur Umsetzung des vom Gemischbildungsabschnitt 10 bereitgestellten Gemischs in wasserstoffhaltiges Brenngas. Hierzu umfasst der Katalysatorabschnitt 11 einen Katalysator 15 aus einem zur Herstellung eines derartigen Brenngases geeigneten Katalysatormaterial, das z. B. auf ein geeignetes Substrat, z.B. aus Keramik oder Metall, aufgebracht ist. Am Katalysatorabschnitt 11 ist ein Brenngasausgang 16 des Reformers 3 ausgebildet. Der Brenngasausgang 16 ist über eine Brenngasleitung 17 mit dem Anodeneingang 4 verbunden.

Zur Versorgung der Brennstoffzelle 2 und des Reformers 3 mit Oxidatorgas ist eine Oxidatorzuführungseinrichtung 18 vorgesehen, die beispielsweise eine erste Oxidatorleitung 19, die an den Kathodeneingang 6 angeschlossen ist, und eine zweite Oxidatorleitung 20 aufweist, die an den Oxidatoreingang 13 angeschlossen ist. Die beiden Oxidatorleitungen 19, 20 zweigen bei 21 von einer gemeinsamen Oxidatorzuführungsleitung 22 ab, in der eine Fördereinrichtung 23, z.B. ein Gebläse und eine Pumpe, zum Antreiben des Oxidatorgases zur Brennstoffzelle 2 bzw. zum Reformer 3 angeordnet ist. Die Abzweigstelle 21 kann durch eine Ventilanordnung gebildet sein, die den Durchfluss durch die eine und/oder durch die andere Oxidatorleitung 19, 20 steuert.

Zur Versorgung des Reformers 3 mit Kraftstoff ist eine Kraftstoffzuführungseinrichtung 24 vorgesehen, die eine an den Kraftstoffeingang 12 angeschlossene Kraftstoffzuführungsleitung 25 sowie eine darin angeordnete Pumpe 26 aufweist.

An den Kathodenausgang 7 ist eine Kathodenabgasleitung 27 zum Abführen von Kathodenabgas angeschlossen. An den Anodenausgang 5 ist eine Anodenabgasleitung 28 zum Abführen von Anodenabgas angeschlossen. Die Kathodenabgasleitung 27 ist bei 29 mit der Anodenabgasleitung 28 zusammengeführt, die ab dieser Anschlussstelle 29 eine gemeinsame Brennstoffzellenabgasleitung 30 zum Abführen von Anodenabgas und Kathodenabgas bildet. Die Anschlussstelle 29 ist hier innerhalb eines Restgasbrenners 31 angeordnet. In der Folge ist der Restgasbrenner 31 eingangsseitig an die Kathodenabgasleitung 27 und an die Anodenabgasleitung 28 angeschlossen. Ausgangsseitig ist der Restgasbrenner 31 an die Brennstoffzellenabgasleitung 30 angeschlossen. Der Restgasbrenner 31 dient dazu, Anodenabgas und Kathodenabgas zu verbrennen, um dadurch nicht oder nicht vollständig umgesetzte Reste des Brenngases umzusetzen. Hierdurch werden zum einen die Emissionswerte des Brennstoffzellensystems 1 verbessert. Zum anderen wird im Brennstoffzellenabgas Wärme freigesetzt. Durch Nutzung dieser Wärme lässt sich der Wirkungsgrad des Brennstoffzellensystems 1 verbessern. Hierzu weist das Brennstoffzellensystem 1 außerdem einen Wärmeübertrager 32 auf, der im folgenden auch als Hauptwärmeübertrager 32 bezeichnet wird. Der Hauptwärmeübertrager 32 ist einerseits in die Brennstoffzellenabgasleitung 30 stromab des Restgasbrenners 31 und andererseits in die erste Oxidatorleitung 19 eingebunden. Der Hauptwärmeübertrager 32 ermöglich somit eine wärmeübertragende Kopplung zwischen den Abgasen der Brennstoffzelle 2 bzw. des Restgasbrenners 31 und dem der Brennstoffzelle 2 zugeführten Oxidatorgas.

Des Weiteren kann das Brennstoffzellensystem 1 optional mit einem weiteren Wärmeübertrager 33 ausgestattet sein, der im folgenden als Zusatzwärmeübertrager 33 bezeichnet wird. Der Zusatzwärmeübertrager 33 ist einerseits in die Brennstoffzellenabgasleitung 30 stromab des Hauptwärmeübertragers 32 und andererseits in einen Abwärmepfad 34 eingebunden. Der Abwärmepfad 34 dient zur Nutzung von im Abgas der Brennstoffzelle 2 bzw. des Restgasbrenners 31 enthaltener Wärme. Beispielsweise ist der Abwärmepfad 34 durch eine Kühlmittelleitung eines Kühlmittelkreises der Brennkraftmaschine des Kraftfahrzeugs gebildet. Das Brennstoffzellensystem 1 kann dann beispielsweise als Zuheizer für die Brennkraftmaschine genutzt werden. Alternativ kann der Abwärmepfad 34 durch eine Warmluftleitung einer Innenheizeinrichtung des Fahrzeugs gebildet sein. Das Brennstoffzellensystem 1 lässt sich dann als Standheizung für das Fahrzeug verwenden, wenn ein Gebläse der Innenraumheizeinrichtung einen der Verbraucher 9 bildet.

Das Brennstoffzellensystem 1 ist mit einem Rezirkulationswärmeübertrager 35 ausgestattet. Dieser ist bei der in Fig. 1 gezeigten Ausführungsform einerseits in die zweite Oxidatorleitung 20, also stromab der Abzweigstelle 21, und andererseits in eine Rezirkulationsleitung 36 eingebunden. Die Rezirkulationsleitung 36 ist über eine Anschlussstelle 37 an die Anodenabgasleitung 28 und über den Rezirkulationseingang 14 an den Reformer 3 angeschlossen. Die Rezirkulationsleitung 36 ermöglicht somit eine Rückführung von Anodenabgas über den Rezirkulationswärmeübertrager 35 in den Reformer 3. Die im rückgeführten Anodenabgas mitgeführte Wärme wird hierbei zur Vorwärmung des dem Reformer 3 zugeführten Oxidatorgases genutzt. In der Rückführleitung 36 kann zwischen dem Rezirkulationswärmeübertrager 35 und dem Reformer 3 eine Fördereinrichtung 38, z.B. eine Pumpe oder ein Gebläse, zum Antreiben des Anodenabgases angeordnet sein.

Der Rezirkulationswärmeübertrager 35 ist hier als separates Bauteil ausgestaltet. Grundsätzlich ist es jedoch möglich, den Rezirkulationswärmeübertrager 35 in den Hauptwärmeübertrager 32 zu integrieren.

Bei der in Fig. 2 gezeigten Ausführungsform ist der Rezirkulationswärmeübertrager 35 einerseits wieder in die Rezirkulationsleitung 36 jedoch andererseits in die gemeinsame Oxidatorversorgungsleitung 22, also stromauf der Abzweigstelle 21, eingebunden. Bei dieser Ausführungsform kann somit sowohl das dem Reformer 3 als auch das der Brennstoffzelle 2 zugeführte Oxidatorgas vorgewärmt werden. Der Gesamtvolumenstrom an Oxidatorgas durch den Rezirkulationswärmeübertrager 35 ist bei dieser Ausführungsform größer als bei der Variante gemäß Fig. 1 oder wie bei einer konventionellen Ausführungsform, bei welcher der Rezirkulationswärmeübertrager 35 in die erste Oxidatorleitung 19 eingebunden ist. In der Folge kann das rückgeführte Gas stärker gekühlt werden.

Vorzugsweise wird das rezirkulierte Gas der Anodenabgasleitung 28 entnommen; dementsprechend befindet sich die Anschlussstelle 37 gemäß Fig. 1 an der Anodenabgasleitung 28. Hierdurch kann nicht umgesetztes Brenngas im Reformierungsprozess genutzt werden. Alternativ ist es grundsätzlich möglich, das Abgas des Restgasbrenners 31 rückzuführen. Hierzu kann gemäß Fig. 2 die Rezirkulationsleitung 36 bei 39 stromab des Restgasbrenners 31 an die Brennstoffzellenabgasleitung 30 angeschlossen sein. Diese Anschlussstelle 39 befindet sich dabei vorzugsweise stromab des Hauptwärmeübertragers 32, um eine Überhitzung der mit dem rezirkulierten Gas in Kontakt tretenden Komponenten, insbesondere der Fördereinrichtung 38, zu vermeiden. Die in Fig. 1 gezeigte Ausführung, nämlich die Kopplung zwischen Anodenabgasleitung 28 mit zweiter Oxidatorleitung 20, lässt sich beliebig mit den in Fig. 2 gezeigten Varianten kombinieren, nämlich einerseits die Kopplung mit der Brennstoffzellabgasleitung 30 und andererseits die Kopplung mit der gemeinsamen Oxidatorversorgungsleitung 22.

Das hier in den Fig. 1 und 2 gezeigte Brennstoffzellensystem 1 weist außerdem eine thermisch isolierende Isolationsbox 40 auf, die hier durch eine unterbrochene Linie angedeutet ist. Innerhalb der Isolationsbox 40 sind die besonders heißen Komponenten des Brennstoffzellensystems 1 angeordnet. In jedem Fall sind im Inneren der Isolationsbox 40 die Brennstoffzelle 2 und - soweit vorhanden - der Restgasbrenner 31 und der Hauptwärmeübertrager 32 angeordnet. Im gezeigten Beispiel ist außerdem der Rezirkulationswärmeübertrager 35 innerhalb der Isolationsbox 40 angeordnet. Bei anderen Ausführungsformen kann der Rezirkulationswärmeübertrager 35 außerhalb der Isolationsbox 40 angeordnet sein. Zumindest befindet sich die eingangsseitige Anschlussstelle 37 bzw. 39 der Rezirkulationsleitung 36 innerhalb der Isolationsbox 40. In diesem Fall ist die in der Rezirkulationsleitung 36 angeordnete Fördereinrichtung 38 außerhalb der Isolationsbox 40 angeordnet. Im Beispielfall ist außerdem der Reformer 3 außerhalb der Isolationsbox 40 angeordnet, obwohl er grundsätzlich auch innerhalb der Isolationsbox 40 angeordnet werden kann.

Das Brennstoffzellensystem 1 kann außerdem eine Sensorik 41 aufweisen, die im vorliegenden Fall durch mehrere Temperatursensoren 42 gebildet ist, die an geeigneten Messstellen angeordnet sind. Beispielsweise befindet sich ein Temperatursensor 42 zwischen dem Gemischbildungsabschnitt 10 und dem Katalysatorabschnitt 11 des Reformers 3. Ein weiterer Temperatursensor 42 ist am Brenngasausgang 16 angeordnet. Ein Temperatursensor 42 ist außerdem am Ausgang des Restgasbrenners 31 angeordnet. Ferner kann noch am Anodenausgang 5 ein weiterer Temperatursensor 42 angeordnet sein.

Mit Hilfe des Rezirkulationswärmeübertragers 35 wird eine wärmeübertragende Kopplung zwischen dem über die Rezirkulationsleitung 36 dem Reformer 3 rückgeführten Gas und dem Oxidatorgas erreicht, das entweder gemäß der in Fig. 1 gezeigten Ausführungsform nur dem Reformerprozess oder gemäß der in Fig. 2 gezeigten Ausführungsform sowohl dem Reformerprozess als auch dem Brennstoffzellenprozess zugeführt wird. Dabei handelt es sich beim rückgeführten Gas bei der in Fig. 1 gezeigten Ausführungsform um Anodenabgas, also um ein vergleichsweise reaktives Gas. Im Unterschied dazu handelt sich beim rezirkulierten Gas gemäß der in Fig. 2 gezeigten Ausführungsform um das Abgas des Restgasbrenners 31, also um ein vergleichsweise reaktionsträges oder inertes Gas. Durch diese Wärmekopplung wird zum einen eine Vorwärmung des dem Reformer 3 zugeführten Oxidatorgases ermöglicht, wodurch der Reformerprozess verbessert werden kann. Durch die Verbesserung des Reformerprozess lässt sich der Wirkungsgrad des Brennstoffzellensystems 1 erhöhen. Gleichzeitig bewirkt die Wärmekopplung zwangsläufig eine Abkühlung des rezirkulierten Gases. Hierdurch können lokale Überhitzungen im Reformer 3 vermieden werden. Besonders bedeutsam ist die Abkühlung des rezirkulierten Gases jedoch im Hinblick auf die in der Rezirkulationsleitung 36 angeordnete Fördereinrichtung 38. Diese ist in der Rezirkulationsleitung 36 zwischen dem Rezirkulationswärmeübertrager 35 und dem Reformer 3 angeordnet und wird dadurch nur mit gekühltem rezirkulierten Gas beaufschlagt. Auf diese Weise kann die Fördereinrichtung 38 vergleichsweise preiswert hergestellt werden.

## Patentansprüche

1. Brennstoffzellensystem, insbesondere für ein Kraftfahrzeug,
- mit einer Brennstoffzelle (2) zum Erzeugen von elektrischem Strom aus Oxidatorgas und Brenngas, die einen Anodeneingang (4), einen Anodenausgang (5), einen Kathodeneingang (6), einen Kathodenausgang (7) und wenigstens einen elektrischen Stromanschluss (8) aufweist,
- mit einem Reformer (3) zum Erzeugen von Brenngas aus Oxidator und Kraftstoff, der einen Oxidatoreingang (13), einen Kraftstoffeingang (12), einen Rezirkulationseingang (14) und einen Brenngasausgang (16) aufweist,
- mit einer ersten Oxidatorleitung (19) zur Versorgung der Brennstoffzelle (2) mit Oxidatorgas, die an den Kathodeneingang (6) angeschlossen ist,
- mit einer zweiten Oxidatorleitung (20) zur Versorgung des Reformers (3) mit Oxidatorgas, die an den Oxidatoreingang (13) angeschlossen ist,
- mit einer Brennstoffzellenabgasleitung (30), die über eine Kathodenabgasleitung (27) an den Kathodenausgang (7) und über eine Anodenabgasleitung (28) an den Anodenausgang (5) angeschlossen ist,
- mit einer Rezirkulationsleitung (36), die ausgangsseitig an den Rezirkulationseingang (14) angeschlossen ist,
- mit einem Rezirkulationswärmeübertrager (35), der einerseits in die Rezirkulationsleitung (36) eingebunden ist,
- mit einem Restgasbrenner (31), der eingangsseitig an die Anodenabgasleitung (28) und an die Kathodenabgasleitung (27) und ausgangsseitig an die Brennstoffzellenabgasleitung (30) angeschlossen ist
**dadurch gekennzeichnet,**
- **dass** der Rezirkulationswärmeübertrager (35) andererseits in die zweite Oxidatorleitung (20) oder in eine gemeinsame Oxidatorversorgungsleitung (22) zur Versorgung der ersten Oxidatorleitung (19) und der zweiten Oxidatorleitung (20) mit Oxidatorgas eingebunden ist,
- **dass** die Rezirkulationsleitung (36) eingangsseitig entweder stromauf des Restgasbrenners (31) an die Anodenabgasleitung (28) oder stromab des Restgasbrenners (31) an die Brennstoffzellenabgasleitung (30) angeschlossen ist.

2. Brennstoffzellensystem nach Anspruch 1,
**dadurch gekennzeichnet,**
**dass** ein Hauptwärmeübertrager (32) vorgesehen ist, der einerseits stromab des Restgasbrenner (31) in die Brennstoffzellenabgasleitung (30) und andererseits in die erste Oxidatorleitung (19) eingebunden ist.

3. Brennstoffzellensystem nach Anspruch 1 oder 2,
**dadurch gekennzeichnet,**
**dass** die Rezirkulationsleitung (36) stromab des Hauptwärmeübertragers (32) an die Brennstoffzellenabgasleitung (30) angeschlossen ist.

4. Brennstoffzellensystem nach einem der Ansprüche 1 bis 3,
**dadurch gekennzeichnet,**
- **dass** der Rezirkulationswärmeübertrager (35) stromab einer Abzweigstelle (21), bei der die erste Oxidatorleitung (19) und die zweite Oxidatorleitung (20) von der gemeinsamen Oxidatorversorgungsleitung (22) abzweigen, in die zweite Oxidatorleitung (20) eingebunden ist, oder
- **dass** der Rezirkulationswärmeübertrager (35) stromauf einer Abzweigstelle (21), bei der die erste Oxidatorleitung (19) und die zweite Oxidatorleitung (20) von der gemeinsamen Oxidatorversorgungsleitung (22) abzweigen, in die gemeinsame Oxidatorversorgungsleitung (22) eingebunden ist.

5. Brennstoffzellensystem nach einem der Ansprüche 1 bis 4,
**dadurch gekennzeichnet,**
**dass** in der Rezirkulationsleitung (36) stromab des Rezirkulationswärmeübertragers (35) eine Fördereinrichtung (38) zum Antreiben von rezirkuliertem Gas angeordnet ist.

6. Brennstoffzellensystem nach einem der Ansprüche 1 bis 5,
**dadurch gekennzeichnet,**
**dass** eine thermisch isolierende Isolationsbox (40) vorgesehen ist, in der zumindest die Brennstoffzelle (2) angeordnet ist.

7. Brennstoffzellensystem nach Anspruch 6,
**dadurch gekennzeichnet,**
- **dass** innerhalb der Isolationsbox (40) zumindest eine der folgenden Komponenten angeordnet ist: Reformer (3), Rezirkulationswärmeübertrager (35), Restgasbrenner (31), Hauptwärmeübertrager (32), Anschlussstelle (37), über welche die Rezirkulationsleitung (36) an die Anodenabgasleitung (28) angeschlossen ist, Anschlussstelle (39), über welche die Rezirkulationsleitung (36) an die Brennstoffzellenabgasleitung (30) angeschlossen ist, und/oder
- **dass** außerhalb der Isolationsbox (40) zumindest die Fördereinrichtung (38) angeordnet ist.

## Claims

1. Fuel cell system, especially for a motor vehicle,
- with a fuel cell (2) for generating electric current from an oxidiser gas and a fuel gas that has an anode inlet (4), an anode outlet (5), a cathode inlet (6), a cathode outlet (7) and at least one electrical connection (8),
- with a reformer (3) for the production of fuel gas from oxidiser and fuel that has an oxidiser inlet (13), a fuel inlet (12), a recirculation inlet (14) and a fuel gas outlet,
- with a first oxidiser line (19) to supply the fuel cell (2) with oxidiser gas, which is connected to the cathode inlet (6),
- with a second oxidiser line (20) to supply the reformer (3) with oxidiser gas, which is connected to the oxidiser inlet (13),
- with a fuel cell exhaust line (30), which is connected via a cathode exhaust line (27) to the cathode outlet and via an anode exhaust line (28) to the anode outlet (5),
- with a recirculation line (36), the outlet end of which is connected to the recirculation inlet (14),
- with a recirculation heat exchanger (35), of which one side is inserted in the recirculation line (36),
- with a residual gas burner (31), the inlet end of which is connected to the anode exhaust line (28) and to the cathode exhaust line (27) and the outlet end of which is connected to the fuel cell exhaust line (30),
**characterised in that**,
- the other side of the recirculation heat exchanger (35) is inserted in the second oxidiser line (20) or in a common oxidiser supply line (22) that supplies the first oxidiser line (19) and the second oxidiser line (20) with oxidiser gas,
- the inlet end of the recirculation line (36) is connected either upstream of the residual gas burner (31) to the anode exhaust line (28) or downstream of the residual gas burner (31) to the fuel cell exhaust line (30).

2. Fuel cell system according to claim 1, **characterised in that** a main heat exchanger (32) is provided that, on one side, is inserted in the fuel cell exhaust line (30) and, on the other side, in the first oxidiser line (19).

3. Fuel cell system according to claim 1 or 2, **characterised in that** the recirculation line (36) is connected to the fuel cell exhaust line (30) downstream of the main heat exchanger (32).

4. Fuel cell system according to one of claims 1 to 3, **characterised in that**
- the recirculation heat exchanger (35) is inserted in the second oxidiser line (20), downstream of a branching point (21) at which the first oxidiser line (19) and the second oxidiser line branch off from the common oxidiser supply line (22) or
- the recirculation heat exchanger (35) is inserted in the common oxidiser supply line (22), upstream of a branching point (21) at which the first oxidiser line (19) and the second oxidiser line (20) branch off from the common oxidiser supply line (22).

5. Fuel cell system according to one of claims 1 to 4, **characterised in that** a feeder device (38) is arranged in the recirculation line (36) downstream of the recirculation heat exchanger (35) to drive the flow of recirculated gas.

6. Fuel cell system according to one of claims 1 to 5, **characterised in that** a thermally insulating insulation box (40) is provided in which at least the fuel cell (2) is arranged.

7. Fuel cell system according to claim 6, **characterised in that**
- at least one of the following components is arranged inside the insulation box (40): reformer (3), recirculation heat exchanger (35), residual gas burner (31), main heat exchanger (32), connection point (37) at which the recirculation line (36) is connected to the anode exhaust gas line (28), connection point (39) at which the recirculation line (36) is connected to the fuel cell exhaust gas line (30) and/or
- at least the feeder device (38) is arranged outside the insulation box (40).

## Revendications

1. Système de piles à combustible, en particulier pour un véhicule automobile,
- comprenant une pile à combustible (2) servant à produire un courant électrique à partir d'un gaz oxydant et d'un gaz combustible, laquelle présente une entrée anodique (4), une sortie anodique (5), une entrée cathodique (6), une sortie cathodique (7) et au moins un raccordement de courant (8) électrique,
- comprenant un réformeur (3) servant à produire un gaz combustible à partir d'un oxydant et d'un carburant, qui présente une entrée d'oxydant (13), une entrée de carburant (12), une entrée de remise en circulation (14) et une sortie de gaz combustible (16),
- comprenant un premier conduit d'oxydant (19) servant à alimenter en gaz oxydant la pile à combustible (2), lequel est raccordé à l'entrée cathodique (6),
- comprenant un deuxième conduit d'oxydant (20) servant à alimenter en gaz oxydant le réformeur (3), lequel est raccordé à l'entrée d'oxydant (13),
- comprenant un conduit de gaz d'échappement de pile à combustible (30), qui est raccordé par l'intermédiaire d'un conduit de gaz d'échappement cathodique (27) à la sortie cathodique (7) et par l'intermédiaire d'un conduit de gaz d'échappement anodique (28) à la sortie anodique (5),
- comprenant un conduit de remise en circulation (36), qui est raccordé côté sortie à l'entrée de remise en circulation (14),
- comprenant un transmetteur de chaleur de remise en circulation (35), qui est intégré d'une part dans le conduit de remise en circulation (36),
- comprenant un brûleur de gaz résiduel (31), qui est raccordé côté entrée au conduit de gaz d'échappement anodique (28) et au conduit de gaz d'échappement cathodique (27), et, côté sortie, au conduit de gaz d'échappement de pile à combustible (30),
**caractérisé en ce**
- **que** le transmetteur de chaleur de remise en circulation (35) est intégré d'autre part dans le deuxième conduit d'oxydant (20) ou dans un conduit commun d'alimentation en oxydant (22) servant à alimenter le premier conduit d'oxydant (19) et le deuxième conduit d'oxydant (20) en gaz oxydant,
- en ce que le conduit de remise en circulation (36) est raccordé côté entrée soit en amont du brûleur de gaz résiduel (31) au conduit de gaz d'échappement anodique (28) soit en aval du brûleur de gaz résiduel (31) au conduit de gaz d'échappement de pile à combustible (30).

2. Système de piles à combustible selon la revendication 1,
**caractérisé en ce**
**qu'**un transmetteur de chaleur principal (32) est prévu, lequel est intégré d'une part en aval du brûleur de gaz résiduel (31) dans le conduit de gaz d'échappement de pile à combustible (30) et d'autre part dans le premier conduit d'oxydant (19).

3. Système de piles à combustible selon la revendication 1 ou 2,
**caractérisé en ce**
**que** le conduit de remise en circulation (36) est raccordé en aval du transmetteur de chaleur principal (32) au conduit de gaz d'échappement de pile à combustible (30).

4. Système de piles à combustible selon l'une quelconque des revendications 1 à 3,
**caractérisé en ce**
- **que** le transmetteur de chaleur de remise en circulation (35) est intégré en aval d'un point de déviation (21), pour lequel le premier conduit d'oxydant (19) et le deuxième conduit d'oxydant (20) dévient du conduit commun d'alimentation en oxydant (22), dans le deuxième conduit d'oxydant (20), ou
- en ce que le transmetteur de chaleur de remise en circulation (35) est intégré en aval d'un point de déviation (21), pour lequel le premier conduit d'oxydant (19) et le deuxième conduit d'oxydant (20) dévient du conduit commun d'alimentation en oxydant (22), dans le conduit commun d'alimentation en oxydant (22).

5. Système de piles à combustible selon l'une quelconque des revendications 1 à 4,
**caractérisé en ce**
**qu'**un système de refoulement (38) servant à entraîner un gaz remis en circulation est disposé dans le conduit de remise en circulation (36) en aval du transmetteur de chaleur de remise en circulation (35).

6. Système de piles à combustible selon l'une quelconque des revendications 1 à 5,
**caractérisé en ce**
**qu'**une boîte isolante (40) à isolation thermique est prévue, dans laquelle est disposée au moins la pile à combustible (2).

7. Système de piles à combustible selon la revendication 6,
**caractérisé en ce**
- **qu'**au moins un des composants suivants est disposé à l'intérieur de la boîte isolante (40) : réformeur (3), transmetteur de chaleur de remise en circulation (35), brûleur de gaz résiduel (31), transmetteur de chaleur principal (32), point de raccordement (37), par l'intermédiaire duquel le conduit de remise en circulation (36) est raccordé au conduit de gaz d'échappement anodique (28), point de raccordement (39), par l'intermédiaire duquel le conduit de remise en circulation (36) est raccordé au conduit de gaz d'échappement de pile à combustible (30), et/ou
- en ce qu'au moins le système de refoulement (38) est disposé à l'extérieur de la boîte isolante (40).
